# EUROPEAN PATENT SPECIFICATION

(11) **EP 0 414 768 B1**
(45) Date of publication and mention of the grant of the patent: **16.02.1994**
(21) Application number: 89905740.0
(22) Date of filing: 17.05.1989
(51) Int. Cl.: C09J 125/08, C08L 51/06

(54) **PRESSURE SENSITIVE ADHESIVE COMPOSITIONS**
DRUCKEMPFINDLICHE KLEBSTOFFZUSAMMENSETZUNGEN
COMPOSITIONS DE COLLES SENSIBLES A LA PRESSION

(30) Priority: 17.05.1988 GB 8811634; 11.11.1988 GB 8826479
(43) Date of publication of application: 06.03.1991
(73) Proprietor: Swift Adhesives Limited, Twickenham, Middlesex TW1 3NE (GB); AEI CABLES LIMITED, Northfleet, Gravesend Kent DA11 9DA (GB)
(72) Inventor: MARTIN, Leslie Phillip, Greenford Middlesex UB6 9AA (GB); BEVERIDGE, Colin, Gravesend Kent DA11 7LQ (GB)
(74) Representative: Matthews, Derek Peter
(86) International application number: GB8900533
(87) International publication number: WO8911512

(56) References cited:
- EP-A- 0 240 044
- Chemical Abstracts, vol. 91, no. 8, 1979, Columbus, Ohio, US, see page 47, abstract no. 58166d; & JP-A-7936356

## Description

This invention relates to pressure sensitive adhesive compositions and more particularly to such compositions containing a cross-linkable silane-modified styrene block copolymer.

Pressure sensitive adhesives are adhesives which will adhere to a surface under the application of light pressure. Such adhesives have found extensive acceptance for both industrial and domestic uses. Thus, for example tapes, tiles and labels coated with pressure sensitive adhesives are readily available commercially and can be found in many if not most homes and work places.

It is of course essential that an adhesive should retain its adhesive power under the conditions it is likely to experience and accordingly for many uses it is desirable that an adhesive should be capable of withstanding high temperatures.

However pressure sensitive adhesives, in particular hot melt pressure sensitive adhesives, generally lose their adhesive power at relatively low temperatures, usually well below 100°C, for example 70 to 80°C. For higher temperature uses, phenolic resin-containing pressure sensitive adhesives have been used; these too, however, have upper service temperatures of 120°C and fail after about an hour at 170°C.

The temperature of thermal failure of an adhesive may readily be tested by bonding two substrates together using the adhesive, placing a load upon the bond, heating the substrates at a constant rate of increase of temperature and noting the temperature at which the bond yields. Such a test is described in Example 4 hereinafter.

We are aware of no previous pressure sensitive adhesive capable of withstanding temperatures over about 170°C for periods over about one hour. We have now surprisingly found that pressure sensitive adhesives containing a cross-linked silane-grafted styrene ABA block copolymer having a saturated aliphatic midblock have significantly higher thermal failure temperatures and one composition tested at a rate of increase of temperature of 3°C per minute had not failed even when the maximum temperature of 200°C of the testing oven had been reached and had still not failed after three hours at 200°C.

Moreover we have also surprisingly found that pressure sensitive adhesive compositions containing such silane grafted block copolymers are pressure sensitive before, during and after curing (cross-linking).

Thus the present invention provides a pressure sensitive adhesive composition comprising from 10 to 40% by weight of a cross-linkable, silane-modified ABA block copolymer wherein A represents a styrenic end block and B represents a saturated aliphatic midblock; from 90 to 60% by weight of a mixture of a liquid midblock-compatible plasticizer and a solid midblock-compatible tackifying resin, the percentages being relative to the total weight of silane-modified copolymer, liquid plasticizer and solid tackifying resin within the composition, the weight ratio of plasticiser to tackifier being from 20:80 to 70:30; and from 0.005% to 0.2% by weight a silanol condensation catalyst the percentages of the catalyst being relative to the weight of the adhesive composition as a whole, excluding any solvent.

By liquid and solid it is meant that the midblock compatible plasticizer and tackifying resin components should be materials which are respectively liquid or solid at ambient conditions, for example at 21°C.

The tackifying component of the adhesive composition of the invention is essential in order that the pressure sensitive adhesive produced on the cross-linking of the silane-modified copolymer should have sufficient surface tack to perform as a pressure sensitive adhesive. Surface tack levels of pressure sensitive adhesives can readily be measured in many ways, for example using the rolling ball or loop tack tests. However, it may be noted that, unlike sealants, which on curing should retain substantially no surface tack even though they may contain tackifying resins (see for example EP-A-240 044), pressure sensitive adhesives must on curing e.g. for 5 to 17 days retain some level of surface tack even if only a relatively low level such as that exhibited by the repositionable notes recently put onto the market by 3M under the trade name POST-IT. Generally, a pressure sensitive adhesive would be expected to have a score of less than 10 cm, more usually less than 5 cm, e.g. 2cm, in the rolling ball test. In the loop tack (FTM No 9) test method, pressure sensitive adhesives would generally score greater than 1 Newtons/25 mm, e.g. about 10 N/25 mm. Thus in another aspect of the invention we provide a pressure sensitive adhesive composition scoring greater than 1 N/25mm in the loop tack (FTM No 9) test and comprising an adhesive composition according to the invention cured to effect cross-linking of said silane modified block copolymer.

The pressure sensitive adhesive compositions of the present invention contain 10-40%, more preferably 13-30% and especially preferably 15-25%, of the silane-modified copolymer and consequently 90-60%, more preferably 87-70%, especially preferably 85-75% of a mixture of the liquid plasticizer and the solid tackifying resin, the percentages being by weight relative to the total weight of silane-modified copolymer, liquid plasticizer and solid tackifying resin within the composition. The mixture of liquid plasticizer and solid tackifying resin is present in a weight ratio of 20:80 to 70:30, especially preferably 40:60 to 60:40 and particularly preferably 50:50 to 55:45.

Where it is desired that the pressure sensitive adhesive according to the invention be stable at particularly low temperatures as well as at high temperatures, as might for example be the case for adhesives used in the automotive industry, a liquid plasticizer having a particularly low glass transition temperature (T_{g}) might be used, for example a material for which T_{g} is less than -30°C, or more preferably less than -40°C, and a value for the ratio of liquid plasticizer to solid tackifying resin towards the upper ends of the ranges specified above might be selected.

Liquid midblock compatible plasticizers suitable for use in the compositions of the invention are widely available commercially. In this regard, mention may be made particularly of ester-based plasticizers, paraffinic oil plasticizers, liquid polyterpene and liquid hydrocarbon plasticizers and polybutene plasticizers. Polybutene plasticizers, for example those available from BP Chemicals under the trade name Hyvis, deserve particular mention. Liquid polyterpene and hydrocarbon plasticizers such as those available from Goodyear and Exxon under the trade names Wingtack 10 and Escorez 5000 respectively are particularly preferred. The liquid plasticizer component will generally constitute from 10-60% by weight of the total adhesive composition, excluding any solvent.

The solid midblock compatible tackifying resin used in the compositions of the present invention will preferably be a material having a softening point of at least 70°C, for example a material having a softening point in the range 90-115°C. Solid midblock compatible tackifying resins suitable for use in the compositions of the present invention are also widely available commercially. In this regard, particular mention may be made, for example, of aliphatic petroleum hydrocarbon resins and alicyclic hydrocarbon resins, for example Escorez 5300 and Escorez 5380 (available from Exxon). The solid tackifying resin will preferably constitute from 10-60% by weight of the total adhesive composition, excluding any solvent.

The silane-modified styrene ABA block copolymer component of the composition of the invention may be produced either by reacting a styrene ABA block copolymer with a silane or by copolymerising a suitable silane monomer into the ABA block copolymer as it is prepared. References hereinafter to silane-modified copolymers include such silane side-chain materials produced by copolymerisation, which are indistingushable from the materials produced by grafting.

Silane grafting of polymers is well known for the production of materials for use in cable jacketing, wire insulation, piping and product moulding. The preparation of such materials is described in, for example, US-A-3646155, GB-A-1286460, GB-A-1347426, GB-A-1406680, GB-A-1450934 and GB-A-1542543. The silane grafting reaction involves reacting the polymer with an unsaturated silane in the presence of a free radical generator, usually an organic peroxide. The silane grafted polymer that is produced can be cross-linked in the presence of a silanol condensation catalyst and of water.

For the compositions of the present invention, the silane side chain is conveniently of general formula (I)

-A-Si(R)₃₋ₘ(X)ₘ (I)

wherein A represents an optionally substituted divalent organic radical, preferably an optionally substituted alkylene, alkyleneoxy, alkylene-phenylene, or alkylene-oxy-alkylene chain; X represents a leaving group displaceable by hydrolysis, conveniently a halogen atom (e.g. chlorine) or a group R¹O-or R¹COO- where R¹ is a C₁₋₁₀, preferably C₁₋₄, alkyl or alkoxyalkyl group; m is 1,2 or 3, preferably 2 or 3; and R represents a blocking group not displaceable by hydrolysis, for example, a C₁₋₄ alkyl group.

Thus, where the silane side chain is to be introduced by a grafting reaction, the silane used is preferably one of formula II

A¹Si(R)₃₋ₘ(X)ₘ (II)

where A¹ represents an ethylenically unsaturated organic group corresponding to the divalent group A in formula I and R, m and X are as defined above.

In formula II, A¹ conveniently represents a group of formula

CH₂=C(R₂)-(R₃)ₚ₋

where p is 0 or 1; R₂ represents hydrogen or C₁₋₄ alkyl; and R₃ represents a C₁₋₁₀ straight, branched or cyclic alkylene group, a phenylene group, a carbonyloxy group, a carbonyloxy(C₁₋₁₀ alkylene) group, a (C₁₋₁₀ alkylene)carbonyloxy group or a (C₁₋₁₀ alkylene)carbonyl(C₁₋₁₀ alkylene) group optionally carrying pendant glycidoxy groups.

Particularly preferably, however, A¹ represents a C₂₋₅ monoalkenyl group, such as vinyl or allyl, especially vinyl, or a (C₂₋₃ alkenyl)carbonyloxy(C₂₋₃ alkylene) group, such as a gammamethacryloxypropyl group, and particularly preferred unsaturated silanes of formula II include vinyltrimethoxysilane, vinyltriethoxysilane and gammamethacryloxypropyl trimethoxy silane.

Unsaturated silanes of formula II are known or may be prepared by conventional methods.

The silane side chain need only constitute a minor part by weight of the silane modified copolymer, for example up to 20%, generally 0.1 to 10%, preferably 0.5 to 3%, and the ratio of unsaturated silane to block copolymer used in the grafting reaction should be chosen accordingly, or alternatively the weight ratio of monomers where copolymerisation is used.

The styrene block copolymer may for example be a styrene-ethylene-propylene-styrene polymer (e.g. Kraton G1701 available from Shell), but more preferably is a styrene-ethylene-butylene-styrene polymer (i.e. a hydrogenated styrene-butadiene-styrene block copolymer).

The styrene block copolymer is an ABA block copolymer which preferably contains 7-45%, especially preferably 30% by weight of styrene. The average molecular weights of the blocks in the block copolymer will preferably be in the range 3,000 to 40,000 and it is particularly preferred to use copolymers in which the styrene endblocks A have average molecular weights of 7,000 and the aliphatic midblocks B have average molecular weights of 35,000. Such a material is commercially available from Shell under the trade name Kraton G1652.

The ungrafted copolymer moreover is preferably one which has a Brookfield viscosity in 20% solution in toluene at 77°F (25°C) of 400 to 2000 mPas, especially preferably 500 to 1000 mPas.

The free radical generator used in the preparation of the silane grafted block copolymer is preferably an organic peroxide such as dicumyl peroxide. Other free radical generators suggested in the literature (for example in US-A-3646155) may also be used. The free radical generator may conveniently be used in a concentration of 0.01 to 3% and we have found it particularly satisfactory to use a concentration of 0.15 to 0.20% relative to the weight of block copolymer used.

The silane grafting reaction is conveniently effected at a temperature of at least 140°C, preferably between 150°C and 250°C and may be performed in conventional apparatus such as a Ko-Kneader.

We have found that one particular silane modified styrene-ethylene-butylene-styrene block copolymer is particularly suited for use in thermally resistant pressure sensitive adhesives and may be produced by a novel selection of processing conditions and reagent concentrations, namely reacting 100 parts by weight of a styrene-ethylene-butylene-styrene block copolymer with 1.5 to 2.5 parts by weight of a vinyltrialkoxysilane (e.g. vinyltrimethoxysilane) and 0.15 to 0.2 parts by weight of an organic peroxide free radical generator (e.g. dicumyl peroxide) in a reaction temperature range of 150 to 250°C.

The block copolymer used is preferably one having the block molecular weights referred to above and particularly preferably one having a Brookfield viscosity in 20% solution in toluene at 77°F (25°C) of 500 mPas. Particularly preferably, Kraton G-1652 is used.

The silane modified block copolymer component of the compositions of the present invention preferably constitutes from 10 to 40% by weight of the total composition weight, excluding any solvent.

The pressure sensitive adhesive compositions of the present invention also contain a silanol condensation catalyst which, in the presence of water, will catalyse the cross-linking reaction of the silane modified copolymer. Many silanol condensation catalysts are known to the art and thus suitable catalysts include, for example, metal carboxylates, e.g. dibutyl tin dilaurate, organo-metallics, e.g. tetrabutyl titanate, organic bases, e.g. ethylamine, and mineral and fatty acids. Several such compounds are identified for example in US-A-3646155. Among suitable catalysts, organotin compounds such as dibutyl tin dilaurate are preferred. The catalyst conveniently makes up from 0.005 to 0.2% by weight, preferably about 0.02%, of the weight of the adhesive composition as a whole, excluding any solvent.

Where the composition is formulated for hot melt application, the catalyst can conveniently be incorporated into the composition in a masterbatch with a polymer which is compatible with the silane modified block copolymer, for example, in a masterbatch with ungrafted styrene-ethylene-butylene-styrene block copolymer, or with other polymers, for example, ethylene vinyl acetate.

The pressure sensitive adhesive composition of the present invention may of course contain other optional components and in this regard special mention should be made of antioxidants, further polymers, stabilizers, and endblock modifiers.

The adhesive compositions preferably contain at least one antioxidant and in this respect conventional adhesives antioxidants, such as butylated hydroxy-toluene (BHT) may be used. A preferred antioxidant is pentaerythritol-tetrakis-3-(3,5-di-tert.butyl-4-hydroxyphenyl)-propionate, which is available under the trade name Irganox 1010 from Ciba-Geigy. The antioxidant will generally be present in the adhesive composition at about 0.1 to 2.5%, preferably 0.5 to 1%, by weight relative to the total composition weight, excluding any solvent.

The compositions may if desired contain further polymers or polymer mixtures selected to achieve a balance between compatibility with the various components of the composition and the desired viscosity and tack characteristics. The further polymer will conveniently constitute up to 20% by weight, preferably up to 15% by weight, e.g. 1 to 10% by weight and especially preferably about 5% by weight, of the total adhesive composition, excluding any solvent.

If the pressure sensitive adhesive is to be used in conjunction with a transparent substrate, it would be particularly advantageous to include within the adhesive composition a minor quantity, for example up to 1% by weight, of a UV stabilizer, for example one of the Tinuvin stabilizers available from Ciba-Geigy.

The compositions of the invention may also conveniently contain up to about 10% by weight, relative to total composition weight (excluding any solvent), of an endblock modifier, generally a high melting point endblock compatible resin such as a styrene resin having a softening point of 120°C or higher. In this regard, mention may be made of Endex 160, Piccotex 120 and Piccovar 150, all of which are available from Hercules Chemical Co. Inclusion of an endblock modifier may, however, reduce the tack of the pressure sensitive adhesive and as a result the content of the liquid midblock compatible plasticizer and the solid midblock compatible tackifying resin may have to be increased.

The compositions of the present invention may of course contain further optional components, for example, fillers, colorants and opacifiers. In particular, as water is required for the cross-linking of the silane modified block polymer to occur, the adhesive composition may if desired contain further components, moisture releasing agents, which gradually release moisture into the system, for example fillers with surface-bound moisture or moisture-containing polymer microspheres such as those sold as paint opacifiers by Rohm and Haas Company under the trade name Ropaque OP-62 (see EP-A-119054 of Rohm and Haas). Generally, however, the necessary water will be supplied by ambient moisture.

The pressure sensitive adhesive composition according to the present invention is preferably formulated as a solid for hot melt application. However, it may also be formulated in liquid form, for example for application at ambient temperature, by incorporation of an acceptable organic solvent, such as for example toluene, hexane or an ester or ketone solvent.

The silanol condensation catalyst mentioned above is necessary for the cross-linking of the silane modified block copolymer to occur in the formation of the pressure sensitive adhesive. However, to avoid premature occurence of cross-linking, the compositions of the present invention may be produced in two-part form for mixing prior to or during application. One part may thus contain the silane modified block copolymer and the other may contain the catalyst. If the compositions of the invention are in single part form containing both the silanol condensation catalyst and the silane modified copolymer, the composition should preferably be packaged in water-tight containers, e.g. hot melt applicator cartridges.

The two-part system referred to above forms a still further aspect of the present invention, namely a pressure sensitive adhesive system for production of compositions according to the invention as defined hereinbefore, including a first composition comprising a silane modified ABA block copolymer wherein A represents a styrenic end block and B is a saturated aliphatic midblock and a second composition comprising a silanol condensation catalyst, said first and second compositions being packed in separate containers, one or both of said first and second compositions also containing a liquid midblock-compatible plasticizer and one or both of said first and second compositions also containing a solid midblock-compatible tackifying resin.

The pressure sensitive adhesive compositions of the present invention are particularly suitable for the preparation of pressure sensitive adhesive tapes, strips, tiles and the like, and such products also form a further aspect of the present invention. Thus, viewed from a still further aspect, the present invention provides a pressure sensitive adhesive web, optionally coated onto at least one surface of a substrate, e.g. a web substrate such as a tape, sheet or tile, said adhesive web comprising a composition according to the invention as hereinbefore defined in which the silane modified copolymer has been cross-linked.

The adhesive webs according to the invention may take any convenient physical form, for example one of the forms conventional for pressure sensitive adhesive webs, such as for example labels, single or double-sided tapes, self-adhesive tiles, self-adhesive veneers, etc. Where the adhesive web is provided with a substrate on one side, for example where it is in the form of a pressure sensitive adhesive tape or label, the substrate will preferably also be of a heat resistant material, for example polyethylene terephthalate, e.g. Melinex (available from ICI).

The thickness of the pressure sensitive adhesive in the webs of the invention will generally be of the order of 10 to 50 micrometers, for example about 25 micrometers, although for product assembly applications much greater thicknesses may be used, for example thicknesses of up to about 3 mm, preferably thicknesses of only up to about 1 mm.

The adhesive compositions of the present invention, if in liquid form, may be applied to substrates at ambient conditions by conventional techniques, such as for example spraying, painting, dipping, etc. If the composition, however, is in hot melt form, it can be heated to melt generally to 100 to 200°C, preferably about 110 to 170°C; mixed (if the composition is a two part system), for example in a cartridge loaded applicator or by mixing in a mixer head; and applied to the substrates to be bonded or coated, for example at a coating of 25 grams per square metre. Coating if necessary can be achieved by applying a larger than desired amount and by scraping off the excess.

The adhesive webs and compositions according to the present invention are particularly suited to use in product labelling and product assembly applications when the substrate to which the adhesive web or composition is to be applied is hot or is likely to experience high temperatures during its lifetime. Thus, for example the pressure sensitive adhesive webs of the invention may be particularly suited for use in motor vehicle engine compartments, in the assembly of electrical goods, in labelling of hot-formed or heat sterilized products, etc.

The major drawbacks of conventional pressure sensitive adhesives have been low thermal failure temperatures and poor creep resistance. The compositions of the present invention provide significant improvements in both of these respects.

The following Examples are provided to illustrate the present invention further without in any way limiting its scope.

### Example 1

### Preparation of silane grafted styrene ABA block copolymer

100 parts by weight of Kraton G1652 (styrene-ethylene-butylene-styrene block copolymer) is reacted with two parts by weight of vinyl trimethoxy silane using 0.17 parts by weight of dicumyl peroxide as the free radical generator and 0.5 parts by weight of Flectol H (available from Monsanto as an antioxidant. The reaction is carried out in a PR46 Buss Ko-Kneader with the heater units set at 200°C/240°C/160°C and the die heater at setting number 7. The material produced is face cut and air cooled at an output rate of 5.2 kg per hour.

### Example 2

### Properties of silane grafted styrene ABA block copolymer

The silane grafted copolymer of Example 1 was evaluated by viscosity assessment (using a Brabender Plasticorder). The properties of the cross-linked silane grafted copolymer were determined by extruding the silane grafted copolymer with a catalyst masterbatch (0.2% by weight dibutyl tin dilaurate in a 14% vinyl acetate ethylene-vinyl-acetate copolymer), by cross-linking by immersion in water for 16 hours at 80°C, and by determining the percentage gel by solvent extraction using Dekalin at 150°C. The measured viscosities and gel percentages for the starting material Kraton G1652 and for the silane grafted material are as set forth below.

| Property | Kraton G 1652 | Example 1 |
|---|---|---|
| Viscosity (metre-grams 190°C) | 3500 | 2550 |
| Percentage gel | 0 | 70 |

### Example 3

### Preparation of one-part hot melt pressure sensitive adhesive composition

### Composition:

| | |
|---|---|
| Silane grafted copolymer of Example 1 | 15 parts by weight |
| Escorez 5380 (hydrogenated alicylic hydrocarbon - solid midblock compatible tackifying resin) | 40 parts by weight |
| Hyvis 30 (polybutene - liquid midblock compatible plasticizer) | 45 parts by weight |
| Catalyst masterbatch (1% by weight dibutyl tin dilaurate in 28-800 ethylene vinyl acetate) | 1.7 parts by weight |
| Irganox 1010 (antioxidant) | 1 part by weight |

The composition is homogenized prior to the addition of the catalyst. The catalyst is then mixed in and the composition is filled into aluminium cartridges for a hot melt adhesive applicator. A silica gel sachet may be placed in the filled cartridge before it is sealed.

### Example 4

### Properties of hot melt pressure sensitive adhesive composition

The composition of Example 3 had a melt viscosity at 130°C of 20 Pas and at 160°C of 4 Pas. The thermal yield temperature was measured by applying the composition of Example 3 to a 2.54 cm x 2.54 cm overlap of board and polyester film, by allowing this to cure for 7 days at 23°C and 50% relative humidity, by applying a 50 g load and by heating in an oven at a rate of temperature increase of 3°C per minute. When the oven reached its maximum temperature of 200°C, the bond had still not failed. After over three hours at 200°C the bond still had not failed. Thus, the thermal yield temperature (more precisely the lap shear yield temperature) of the adhesive formed by curing the composition of Example 3 is in excess of 200°C.

The composition of Example 3 remains highly tacky even after curing.

### Example 5

### Preparation of one-part hot melt pressure sensitive adhesive composition

### Composition:

| | |
|---|---|
| Silane grafted copolymer of Example 1 | 15 parts by weight |
| Escorez 5380 (hydrogenated alicylic hydrocarbon - solid midblock compatible tackifying resin) | 40 parts by weight |
| Wingtack 10 (polyterpene resin-liquid mid-block compatible plasticizer) | 45 parts by weight |
| Catalyst masterbatch (1% by weight dibutyl tin dilaurate in 28-800 ethylene vinyl acetate) | 1.7 parts by weight |
| Irganox 1010 (antioxidant) | 1 part by weight |

The composition is homogenized prior to the addition of the catalyst. The catalyst is then mixed in and the composition is filed into aluminium cartridges for a hot melt adhesive applicator. A silica gel sachet may be placed in the filled cartridge before it is sealed.

The composition of Example 5 shows significantly improved adhesion and reduced plasticizer leaching relative to that of Example 3. More particularly it showed melt viscosities (measured using a Brookfield Thermocell) at 110°C, 130°C and 160°C of 12, 4 and 1.7 Pa.s. The thermal yield temperature was measured analogously to Example 4 by applying the composition to Melinex and board or polypropylene and curing at 23°C and 50% relative humidity for 5 or 17 days respectively.

The Melinex-to-board bond had not failed when the oven reached its maximum temperature of 200°C. The Melinex-to-polypropylene bond survived until the polypropylene began to soften and melt at 120°C.

### Example 6

### One part adhesive composition

The composition is the admixture of the following components:

| | |
|---|---|
| SGSEBS⁺ | 31.3% |
| Catalyst/SEBS blend (1% dibutyl tin dilaurate) | 1.7% |
| Irganox 1010 (antioxidant) | 1.0% |
| Escorez 5300 (hydrogenated alicyclic hydrocarbon - tackifying resin) | 26.0% |
| Piccotex 100 (α-methyl styrene-vinyl toluene copolymer - tackifying resin) | 10.0% |
| Hyvis 30 (polybutene - plasticizer) | 30.0% |

| | |
|---|---|
| + The SGSEBS is the reaction product of vinyltrimethoxy-silane and SEBS (Kraton G-1650 available from Shell Chemical Co. - Brookfield viscosity in toluene solution at 77°F of 1500 mPas), prepared with a silane content of about 5% using the procedure of US-A-3646155. | |

### Example 7

### Two composition adhesive system

The first composition comprises the following components:

| | |
|---|---|
| Silane grafted copolymer of Example 1 | 15 parts by weight |
| Escorez 5380 (hydrogenated alicylic hydrocarbon - solid midblock compatible tackifying resin) | 40 parts by weight |
| Hyvis 30 (polybutene - liquid midblock compatible plasticizer) | 45 parts by weight |
| Irganox 1010 (antioxidant) | 1 part by weight |

The second composition comprises the following components:

| | |
|---|---|
| 28-800 EVA | 99% |
| Dibutyl tin dilaurate | 1% |

In use, the first and second compositions are melted, mixed in a weight ratio of 98:2 and the mixture is applied to the substrates to be bonded.

## Claims

1. A pressure sensitive adhesive composition comprising from 10 to 40% by weight of a cross-linkable, silane-modified ABA block copolymer wherein A represents a styrenic end block and B represents a saturated aliphatic midblock; from 90 to 60% by weight of a mixture of a liquid midblock-compatible plasticizer and a solid midblock-compatible tackifying resin, the percentages being relative to the total weight of silane-modified copolymer, liquid plasticizer and solid tackifying resin within the composition, the weight ratio of plastiziser to tackifier being from 20:80 to 70:30; and from 0.005% to 0.2% by weight a silanol condensation catalyst the percentages of the catalyst being relative to the weight of the adhesive composition as a whole, excluding any solvent.

2. A composition as claimed in claim 1 containing 87 to 70% by weight of said liquid plasticizer and solid tackifying resin relative to the total weight of silane modified copolymer, liquid plasticizer and solid tackifying resin.

3. A composition as claimed in claim 1 or claim 2 containing said liquid plasticizer and solid tackifying resin in a weight ratio of 40:60 to 60:40.

4. A composition as claimed in any one of claims 1 to 3 containing a liquid plasticizer selected from ester-based plasticizers, paraffinic oil plasticizers, polyterpene plasticizers, hydrocarbon plasticizers and polybutene plasticizers.

5. A composition as claimed in any one of claims 1 to 4 containing a liquid polyterpene plasticizer.

6. A composition as claimed in any one of claims 1 to 5 containing a solid tackifying resin selected from aliphatic petroleum hydrocarbon resins and alicyclic hydrocarbon resins.

7. A composition as claimed in any one of claims 1 to 6 comprising as said silane modified copolymer a silane-grafted styrene-ethylene-propylene-styrene block copolymer.

8. A composition as claimed in any one of claims 1 to 6 comprising as said silane modified copolymer a silane-grafted styrene-ethylene-butylene-styrene block copolymer.

9. A composition as claimed in any one of claims 1 to 8 comprising as said silane-modified copolymer a styrene ABA block copolymer carrying silane side chains of formula I
-A-Si(R)₃₋ₘ(X)ₘ (I)
wherein A represents a divalent organic radical; X represents a leaving group displaceable by hydrolysis; m is 1,2 or 3; and R represents a blocking group not displaceable by hydrolysis.

10. A composition as claimed in any one of claims 1 to 8 comprising as said silane-modified copolymer an ABA block copolymer as defined in claim 1 grafted with a silane selected from vinyltrimethoxysilane, vinyltriethoxysilane and gammamethacryloxypropyl trimethoxy silane.

11. A composition as claimed in any one of claims 1 to 10 containing at least one other component selected from antioxidants; further polymers; UV stabilizers; and endblock modifiers.

12. A composition as claimed in any one of claims 1 to 11 further containing a moisture releasing agent.

13. An adhesive composition as claimed in any one of claims 1 to 12 formulated for hot melt application.

14. An adhesive composition as claimed in any one of claims 1 to 12 formulated in liquid form for application at ambient temperatures.

15. A pressure sensitive adhesive system for production of a composition as claimed in any one of claims 1 to 14, including a first composition comprising a silane modified ABA block copolymer wherein A represents a styrenic end block and B is a saturated aliphatic midblock and a second composition comprising a silanol condensation catalyst, said first and second compositions being packed in separate containers, one or both of said first and second compositions also containing a liquid midblock-compatible plasticizer and one or both of said first and second compositions also containing a solid midblock-compatible tackifying resin.

16. A pressure sensitive adhesive web, optionally coated on to at least one surface of a substrate, said adhesive web comprising a composition as claimed in any one of claims 1 to 14 cured to effect cross linking of the silane modified block copolymer.

## Patentansprüche

1. Druckempfindliche Klebstoffzusammensetzung, umfassend 10 bis 40 Gew.-% eines vernetzbaren Silan-modifizierten ABA-Blockcopolymers, wobei A einen von Styrol abgeleiteten Endblock bedeutet und B einen gesättigten aliphatischen Mittelblock darstellt; 90 bis 60 Gew.-% eines Gemisches eines flüssigen mit dem Mittelblock verträglichen Plastifizierungsmittels und eines festen mit dem Mittelblock verträglichen klebrigmachenden Harzes (1) wobei die Prozentangaben bezogen sind auf das Gesamtgewicht des Silan-modifzierten Copolymers, flüssigen Plastifizierungsmittels und festen klebrigmachenden Harzes innerhalb der Zusammensetzung, das Gewichtsverhältnis von Plastifizierungsmittel zum klebrigmachenden Mittel 20 : 80 bis 70:30 beträgt und 0,005 % bis 0,2 Gew.-% eines Silanolkondensationskatalysators, wobei die Prozentangaben des Katalysators auf das Gewicht des Klebstoffmittels insgesamt unter Ausschluß eines Lösungsmittels bezogen sind.

2. Zusammensetzung nach Anspruch 1, enthaltend 87 bis 70 Gew.-% des flüssigen Plastifizierungsmittels und festen klebrigmachenden Harzes, bezogen auf das Gesamtgewicht von Silan-modifiziertem Copolymer, flüssigem Plastifizierungsmittel und festem klebrigmachenden Harz.

3. Zusammensetzung nach Anspruch 1 oder 2, enthaltend das flüssige Plastifizierungsmittel und das feste, klebrigmachende Harz in einem Gewichtsverhältnis von 40:60 bis 60:40.

4. Zusammensetzung nach einem der Ansprüche 1 bis 3, enthaltend ein flüssiges Plastifizierungsmittel, ausgewählt aus Plastifizierungsmitteln auf Estergrundlage, Plastifizierungsmitteln auf Grundlage paraffinischen Öls, Plastifizierungsmitteln auf Polyterpengrundlage, Kohlenwasserstoffplastifizierungsmitteln und Polybutenplastifizierungsmitteln.

5. Zusammensetzung nach einem der Ansprüche 1 bis 4, enthaltend ein flüssiges Polyterpenplastifizierungsmittel.

6. Zusammensetzung nach einem der Ansprüche 1 bis 5, enthaltend ein festes klebrigmachendes Harz, ausgewählt aus aliphatischen Erdölkohlenwasserstoffharzen und alicyclischen Kohlenwasserstoffharzen.

7. Zusammensetzung nach einem der Ansprüche 1 bis 6, umfassend als das Silan-modifizierte Copolymer ein Silangepfropftes Styrol-Ethylen-Propylen-Styrol-Blockcopolymer.

8. Zusammensetzung nach einem der Ansprüche 1 bis 6, umfassend als das Silan-modifizierte Copolymer ein Silangepfropftes Styrol-Ethylen-Butylen-Styrol-Blockcopolymer.

9. Zusammensetzung nach einem der Ansprüche 1 bis 8, umfassend als das Silan-modifizierte Copolymer ein Styrol-ABA-Blockcopolymer, das Seitenketten der Formel I
-A-Si(R)₃₋ₘ(X)ₘ (I)
trägt, wobei A einen zweiwertigen organischen Rest darstellt; X eine durch Hydrolyse entfernbare Abgangsgruppe bedeutet; m 1, 2 oder 3 darstellt; und R eine Blockierungsgruppe bedeutet, die durch Hydrolyse nicht entfernbar ist.

10. Zusammensetzung nach einem der Ansprüche 1 bis 8, umfassend als das Silan-modifizierte Copolymer ein ABA-Blockcopolymer nach Anspruch 1, gepfropft mit einem Silan, ausgewählt aus Vinyltrimethoxysilan, Vinyltriethoxysilan und γ-Methacryloxypropyltrimethoxysilan.

11. Zusammensetzung nach einem der Ansprüche 1 bis 10, enthaltend mindestens eine weitere Komponente, ausgewählt aus Antioxidantien; zusätzliche Polymeren; UV-Stabilisatoren und Endblockmodifizierungsmitteln.

12. Zusammensetzung nach einem der Ansprüche 1 bis 11, zusätzlich ein feuchtigkeitsfreisetzendes Mittel enthaltend.

13. Klebstoffzusammensetzung nach einem der Ansprüche 1 bis 12, formuliert zur Heißschmelzanwendung.

14. Klebstoffzusammensetzung nach einem der Ansprüche 1 bis 12, formuliert in Flüssigform für die Anwendung bei Umgebungstemperaturen.

15. Druckempfindliches Klebstoffsystem zur Herstellung einer Zusammensetzung nach einem der Ansprüche 1 bis 14, das eine erste Zusammensetzung, umfassend ein Silan-modifiziertes ABA-Blockcopolymer, worin A einen Styrolendblock darstellt und B einen gesättigten aliphatischen Mittelblock bedeutet und eine zweite Zusammensetzung einschließt, umfassend einen Silanol-Kondensationskatalysator, wobei die ersten und zweiten Zusammensetzungen in getrennte Behälter gefüllt sind, eine oder beide der ersten und zweiten Zusammensetzungen auch ein flüssiges, mit dem Mittelblock verträgliches Plastifizierungsmittel enthalten und eine oder beide der ersten und zweiten Zusammensetzungen auch ein festes mit dem Mittelblock verträgliches klebrigmachendes Harz enthalten.

16. Druckempfindliches klebendes Gewebe, gegebenenfalls auf mindestens einer Substratoberfläche aufgetragen, wobei das klebende Gewebe eine Zusammensetzung nach einem der Ansprüche 1 bis 14 umfaßt, gehärtet unter Auslösung von Vernetzung des Silan-modifzierten Blockcolpolymers.

## Revendications

1. Composition adhésive sensible à la pression, comprenant 10 à 40 % en poids d'fin copolymère séquencé ABA modifié par un silane et réticulable, dans lequel A représente un bloc terminal styrénique et B représente un bloc intermédiaire aliphatique saturé, 90 à 60 % en poids d'un mélange d'un plastifiant liquide compatible avec le bloc intermédiaire et d'une résine d'adhésivité solide compatible avec le bloc intermédiaire, les pourcentages étant relatifs au poids total du copolymère modifié par un silane, du plastifiant liquide et de la résine d'adhésivité solide au sein de la composition et le rapport pondéral du plastifiant à l'agent adhésif étant de 20:80 à 70:30, et 0,005 % à 0,2 % en poids d'un catalyseur de condensation de silanol, les pourcentages du catalyseur étant relatifs au poids total de la composition adhésive, à l'exclusion de tout solvant.

2. Composition revendiquée dans la revendication 1, contenant 87 à 70 % en poids (par rapport au poids total du copolymère modifié par un silane, du plastifiant liquide et de la résine solide pour adhésivité) dudit plastifiant liquide et de ladite résine solide pour adhésivité.

3. Composition revendiquée dans la revendication 1 ou 2, contenant ledit plastifiant liquide et ladite résine solide pour adhésivité dans un rapport pondéral 40:60 ou 60:40.

4. Composition revendiquée dans une quelconque des revendications 1 à 3, contenant un plastifiant liquide choisi parmi les plastifiants à base d'ester, les plastifiants à l'huile de paraffine, les plastifiants polyterpéniques, les plastifiants hydrocarbonés et les plastifiants au polybutène.

5. Composition revendiquée dans une quelconque des revendications 1 à 4, contenant un plastifiant liquide polyterpénique.

6. Composition revendiquée dans une quelconque des revendications 1 à 5, contenant une résine d'adhésivité solide choisie parmi les résines d'hydrocarbures aliphatiques de pétrole et les résines d'hydrocarbures alicycliques.

7. Composition revendiquée dans une quelconque des revendications 1 à 6, comprenant, comme copolymère modifié par un silane, un copolymère séquencé styrène/éthylène/propylène/styrène greffé par un silane.

8. Composition revendiquée dans une quelconque des revendications 1 à 6, comprenant, comme copolymère modifié par un silane, un copolymère séquencé styrène/éthylène/butylène/styrène greffé par un silane.

9. Composition revendiquée dans une quelconque des revendications 1 à 8, comprenant, comme copolymère modifié par un silane, un copolymère styrénique séquencé ABA qui comporte des chaînes latérales silane de formule I:
-A-Si(R)₃₋ₘ(X)ₘ (I),
dans laquelle A représente un radical organique divalent, X représente un groupe mobile déplaçable par hydrolyse, m vaut 1, 2 ou 3, et R représente un groupe bloquant non déplaçable par hydrolyse.

10. Composition revendiquée dans une quelconque des revendications 1 à 8, comprenant, comme copolymère modifié par un silane, un copolymère séquencé ABA, tel que défini dans la revendication 1, greffé par un silane choisi parmi vinyltriméthoxysilane, vinyltriéthoxysilane et gammaméthacryloxypropyl-triméthoxysilane.

11. Composition revendiquée dans une quelconque des revendications 1 à 10, contenant au moins un autre constituant choisi parmi des antioxydants, d'autres polymères, des stabilisants anti-UV et des modificateurs de blocs terminaux.

12. Composition revendiquée dans une quelconque des revendications 1 à 11, contenant en outre un agent humidifiant.

13. Composition adhésive revendiquée dans une quelconque des revendications 1 à 12, pour mise en oeuvre par thermofusion.

14. Composition adhésive revendiquée dans une quelconque des revendications 1 à 12, présentée sous forme liquide pour mise en oeuvre à température ambiante.

15. Système adhésif sensible à la pression, pour la production d'une composition telle que revendiquée dans une quelconque des revendications 1 à 14, comprenant une première composition à base d'un copolymère séquencé ABA modifié par un silane, dans lequel A représente un bloc terminal styrénique et B est un bloc intermédiaire aliphatique saturé, et une seconde composition à base d'un catalyseur de condensation de silanol, lesdites première et seconde compositions étant conditionnées dans des récipients séparés, une ou deux desdites première et seconde compositions contenant également un plastifiant liquide compatible avec le bloc intermédiaire et une ou deux desdites première et seconde compositions contenant également une résine d'adhésivité solide compatible avec le bloc intermédiaire.

16. Tissu adhésif sensible à la pression, éventuellement déposé sur au moins une face d'un substrat, ledit tissu adhésif comprenant une composition, telle que revendiquée dans une quelconque des revendications 1 à 14, durcie pour réaliser la réticulation du copolymère séquencé modifié par un silane.
